(19) **Europäisches Patentamt**

**European Patent Office**

**Office européen des brevets**

(11) **EP 0 945 288 B1**

(12) **EUROPÄISCHE PATENTSCHRIFT**

(45) Veröffentlichungstag und Bekanntmachung des Hinweises auf die Patenterteilung:
**24.07.2002   Patentblatt 2002/30**

(51) Int Cl.⁷: **B60G 17/015**, F04B 49/02

(21) Anmeldenummer: **99103745.8**

(22) Anmeldetag: **26.02.1999**

(54) **Luftfederungsanlage für Fahrzeuge**

Air spring installation for vehicles

Installation de ressort pneumatique pour véhicules

(84) Benannte Vertragsstaaten:
**DE FR GB IT**

(30) Priorität: **27.03.1998   DE 19813672**

(43) Veröffentlichungstag der Anmeldung:
**29.09.1999   Patentblatt 1999/39**

(73) Patentinhaber: **DaimlerChrysler AG**
**70567 Stuttgart (DE)**

(72) Erfinder:
• **Kutscher, Eberhard**
**72135 Dettenhausen (DE)**

• **Lang, Joachim**
**71120 Grafenau (DE)**
• **Lohrmann, Gerhard**
**71679 Asperg (DE)**
• **Schneider, Reiner**
**78655 Dunningen (DE)**
• **Walter, Udo**
**73312 Geislingen (DE)**

(56) Entgegenhaltungen:
**EP-A- 0 313 030          DE-A- 3 813 695**

**Beschreibung**

Die Erfindung betrifft eine Luftfederungsanlage für Fahrzeuge, insbesondere Kraftfahrzeuge, mit den Merkmalen des Oberbegriffes des Anspruches 1.

Eine derartige Luftfederungsanlage ist beispielsweise aus der DE 38 08 395 A1 bekannt.

Luftfederungsanlagen der eingangs genannten Art werden vorteilhafterweise mit einem Zentraldruckspeicher ausgestattet, um beispielsweise kurzfristige, schnelle Niveauanhebungen für das Fahrzeug zu ermöglichen, für die der maximale Förderstrom des verwendeten Kompressors in der Regel nicht ausreicht. Außerdem können mit Hilfe eines solchen Zentraldruckspeichers Anhebevorgänge ohne Kompressoreinsatz durchgeführt werden, wodurch zum einen der Kompressor ausgeschaltet bleiben kann und somit geschont wird und zum anderen die Niveauregulierung erheblich schneller ansprechen kann, da eine Anlaufphase des Kompressors entfällt.

Die in einem solchen Zentraldruckspeicher bevorratete Druckluft befindet sich auf einem Druckniveau, das in jedem Fall höher liegen muß als der Luftdruck in den den Fahrzeugrädern zugeordneten Federelementen bei voll beladenem Fahrzeug. Um dieses Druckniveau ständig gewährleisten zu können, muß der Druck im Zentraldruckspeicher überwacht werden, wozu ein Speicherdrucksensor vorgesehen ist.

Ein elektronisches Steuergerät der Luftfederungsanlage führt dabei, unter anderem, eine Druckregelung des im Zentraldruckspeicher herrschenden Luftdruckes durch. Dabei wird der Luftdruck im Zentraldruckspeicher zweckmäßigerweise zwischen einem oberen Grenzdruck und einem unteren Grenzdruck gehalten. Der untere Grenzdruck entspricht dabei dem Minimaldruck, mit dem gerade noch ein Anhebvorgang für das voll beladene Fahrzeug durchgeführt werden kann. Der obere Grenzdruck ist der Maximaldruck, bis zu welchem der Zentraldruckspeicher vom Kompressor aufgeladen wird. Der obere Grenzdruck ergibt sich beispielsweise aus der Leistungsfähigkeit des verwendeten Kompressors.

Wenn der Luftdruck im Zentraldruckspeicher, beispielsweise im Verlaufe einer Fahrzeugniveauanhebung, unter den unteren Grenzdruck fällt, veranlaßt das Steuergerät ein Nachladen bzw. Nachfüllen des Zentraldruckspeichers durch den Kompressor. Ein derartiger Füll- oder Ladevorgang ist beendet, sobald der Luftdruck im Zentraldruckspeicher seinen oberen Grenzdruck erreicht.

Bei Luftfederungsanlagen der eingangs genannten Art werden üblicherweise elektrisch angetriebene, einstufige Kolbenkompressoren bzw. Kolbenpumpen verwendet. Der von einem solchen elektrischen Kompressor geförderte Volumenstrom hängt erheblich vom jeweiligen Umgebungsdruck und vom Gegendruck im Zentraldruckspeicher ab. Die mit einer Luftfederungsanlage der eingangs genannten Art ausgestatteten Fahrzeuge (z.B. Lastkraftwagen und deren Anhänger oder Omnibusse) sollen üblicherweise in einem Höhenbereich zwischen 0 Metern und 4.000 Metern über dem Meeresspiegel voll funktionsfähig arbeiten, was einem Umgebungsdruckbereich von etwa 0,625 bar (4.000 Meter über NN) bis etwa 1 bar (0 Meter über NN) entspricht.

Dieser relativ große Druckbereich für den Umgebungsdruck hat zur Folge, daß der vom verwendeten Kompressor maximal erzielbare Luftdruck zum Aufladen des Zentraldruckspeichers bei kleinem Umgebungsdruck, d.h. in großer Höhe, erheblich niedriger ausfällt als bei großem Umgebungsdruck, d.h. auf Meeresniveau. Versuche haben ergeben, daß mit einem bestimmten Kompressor-Typ bei einem Umgebungsdruck von 1 bar ein maxima-ler Aufladedruck für den Zentraldruckspeicher von 18 bar erzielbar ist, während der maximal erzielbare Druck bei einem Umgebungsdruck von 0,625 bar mit dem gleichen Kompressor-Typ nur noch bei 13 bar liegt. Damit für diesen Kompressor-Typ auch bei einem Umgebungsdruck von 0,625 bar eine zuverlässige Aufladung des Zentraldruckspeichers gewährleistet werden kann, muß der obere Grenzwert für den Luftdruck im Zentraldruckspeicher auf einen Wert kleiner als 3 bar festgelegt werden. Dies bedeutet jedoch, daß für die überwiegende Mehrheit aller Betriebszustände, in denen sich das mit der eingangs genannten Luftfederungsanlage ausgestattete Fahrzeug auf einer Höhe niedriger als 4.000 m über dem Meeresspiegel befindet, die Leistungsfähigkeit des Kompressors und folglich die sich durch die Verwendung eines Zentraldruckspeichers ergebenden Vorteile nur im reduzierten Maße ausgenutzt werden können.

Die vorliegende Erfindung beschäftigt sich mit dem Problem, die Leistungsfähigkeit einer Luftfederungsanlage der eingangs genannten Art zu verbessern.

Dieses Problem wird erfindungsgemäß durch eine Luftfederungsanlage mit den Merkmalen des Anspruches 1 gelöst.

Die Erfindung beruht dabei auf dem allgemeinen Gedanken, den oberen Grenzdruck, bis zu welchem der Zentraldruckspeicher mit Luft befüllt werden kann, in Abhängigkeit des jeweils herrschenden Umgebungsdruckes zu wählen. Auf diese Weise ist es möglich, bei einem höheren Umgebungsdruck den Zentraldruckspeicher mit einem höheren Luftdruck zu befüllen als dies bei einem niedrigeren Umgebungsdruck möglich wäre. Dies hat zur Folge, daß der Zentraldruckspeicher bei höheren Umgebungsdrücken einen erheblich größeren Luftvolumenstrom zur Verfügung stellen kann, wodurch die Leistungsfähigkeit, insbesondere die Schnelligkeit mit der eine Druckerhöhung in den Luftfederelementen durchgeführt werden kann, beträchtlich erhöht ist. Lediglich in extremen Höhen, d.h. bei niedrigen Umgebungsdrücken, weist die erfindungsgemäße Luftfederungsanlage die gleiche Leistungsfähigkeit auf wie eine vergleichbare herkömmliche Luftfederungsanlage ohne die erfindungsgemäße Abstimmung des oberen Grenzdruckes im Zentraldruckspeicher in Abhängigkeit des Umgebungsdruckes.

Zweckmäßigerweise erfolgt die Änderung des oberen Grenzdrukkes bzw. des damit korrelierenden oberen Schwellsignalwertes des Speicherdrucksensors etwa proportional zum Umgebungsdruck bzw. zu dem damit korrelierenden Signalwert des Umgebungsdrucksensors.

Bei einer bevorzugten Ausführungsform der erfindungsgemäßen Luftfederungsanlage legt die Steuereinrichtung den mit dem unteren Grenzdruck im Zentraldruckspeicher korrelierenden unteren Schwellsignalwert in Abhängigkeit von dem mit dem Umgebungsdruck korrelierenden Signalwert des Umgebungsdrucksensors fest. Auf diese Weise wird gewährleistet, daß in den Fällen mit erhöhtem oberen Grenzdruck ebenfalls .ein erhöhter unterer Grenzdruck vorhanden ist. Durch die Anpassung des oberen und unteren Schwellwertes für den Zentralspeicherladungsbeginn bzw. für das Zentralspeicherladungsende wird gewährleistet, daß bei unterschiedlichen Umgebungsdrücken die Druckdifferenz zwischen diesen Schwellwerten etwa gleich bleibt, mit der Folge, daß bei verschiedenen Umgebungsdrücken gleich große Zentralspeicherladehäufigkeiten zu erwarten sind. Das Anheben des unteren Schwellwertes bei hohem Umgebungsdruck hat den Vorteil, daß dadurch bei Fahrten in niedriger Höhe immer ein deutlich höherer Mindestdruck zur Systemversorgung bereitgestellt werden kann. Andererseits hat die Absenkung des unteren Schwellwertes bei niedrigem Umgebungsdruck (z.B. bei Fahrten im Gebirge), zur Folge, daß die Zentralspeicherladehäufigkeit nicht ansteigt, wodurch der Kompressor geschont wird. Außerdem bewirkt diese Maßnahme, daß bei abnehmendem Umgebungsdruck, z.B. während einer Paßfahrt, unnötig häufige Speicherladevorgänge vermieden werden, wodurch der Kompressor ebenfalls geschont wird.

Bei einer besonders vorteilhaften Ausführungsform der erfindungsgemäßen Luftfederungsanlage kann die Abhängigkeit zwischen dem unteren Schwellsignalwert und dem Signalwert des Umgebungsdrucksensors derart gewählt sein, daß bei jedem Umgebungsdruck der Quotient aus oberem und unterem Grenzdruck etwa gleich groß ist bzw. konstant bleibt. Mit Hilfe dieser Maßnahme kann die Luftfederungsanlage im ganzen Umgebungsdruckbereich die Luftfederung bzw. Niveauregulierung mit einem im wesentlichen gleichbleibenden Steuer- und Regelungsverhalten durchführen.

Weitere wichtige Merkmale und Vorteile der erfindungsgemäßen Luftfederungsanlage ergeben sich aus den Unteransprüchen, aus der Zeichnung und aus der nachfolgenden Beschreibung eines bevorzugten Ausführungsbeispieles anhand der Zeichnung.

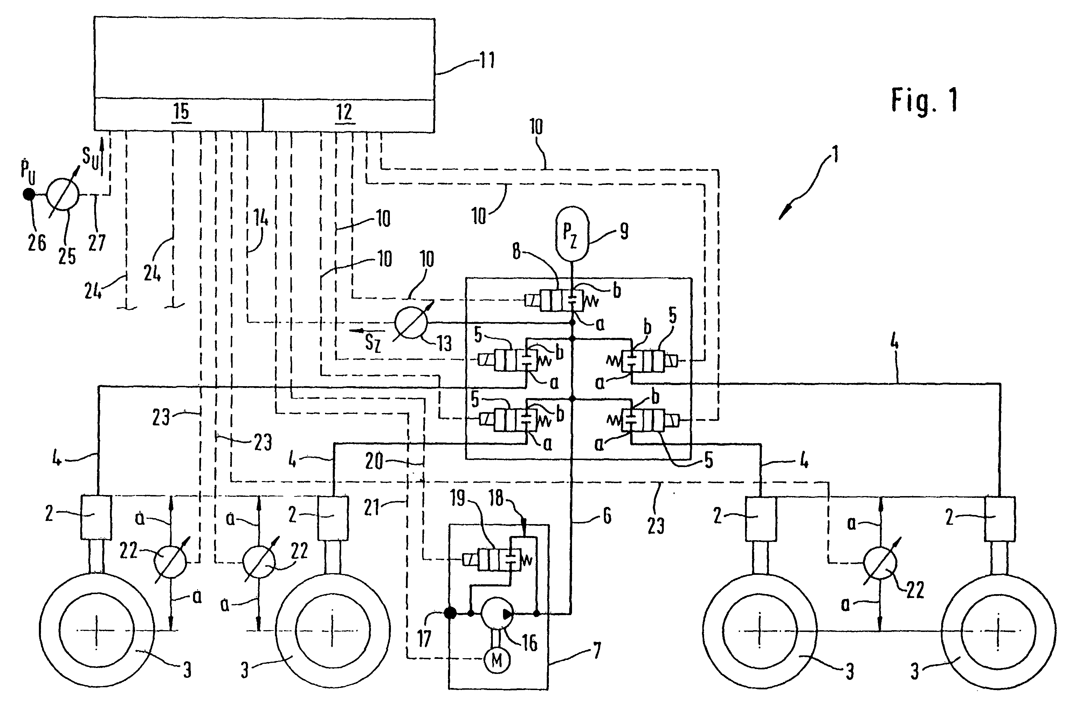

Fig. 1 zeigt eine schematische Prinzipdarstellung der erfindungsgemäßen Luftfederungsanlage.

Entsprechend Fig. 1 weist eine Luftfederungsanlage 1 nach der Erfindung vier Luftfederelemente 2 auf, die jeweils einem Rad 3 eines im übrigen nicht dargestellten Fahrzeuges zugeordnet sind. Es ist jedoch selbstverständlich, daß die erfindungsgemäße Luftfederungsanlage 1 ebenso bei einem Fahrzeug mit anderer Radzahl anwendbar ist.

Jedes der Luftfederelemente 2 ist über eine Druckleitung 4 an einen ersten Anschluß 5a eines elektromagnetisch schaltbaren Sperrventils 5 angeschlossen. Jedes dieser Sperrventile 5 ist über seinen zweiten Anschluß 5b an eine Druckleitung 6 angeschlossen, die einerseits an einen Kompressor 7 und andererseits an einen ersten Anschluß 8a eines weiteren elektromagnetisch schaltbaren Sperrventils 8 angeschlossen ist. Der zweite Anschluß 8b des Sperrventils 8 ist mit einem Zentraldruckspeicher 9 verbunden.

Über elektrische Schaltleitungen 10 sind die Sperrventile 5 und 8 jeweils separat an ein elektronisches Steuergerät 11 der Luftfederungsanlage 1 an dessen Ausgangsseite 2 angeschlossen. Ein derartiges Steuergerät 11 arbeitet vorzugsweise rechnergestützt und verfügt über entsprechende Prozessoren, Speicher und Programme.

An die Druckleitung 6 ist ein Speicherdrucksensor 13 angeschlossen, der einen zu dem gemessenen Druck korrelierenden Signalwert $S_Z$ generiert und diesen Signalwert $S_Z$ über eine entsprechende elektrische Signalleitung 14 an eine Eingangsseite 15 des Steuergerätes 11 weiterleitet.

Der Kompressor 7 umfaßt im dargestellten Ausführungsbeispiel eine elektrisch betriebene Pumpe 16, die durch eine mit einem Punkt symbolisierte Ansaugöffnung 17 Luft aus der Umgebung ansaugt und diese in die Druckleitung 6 einbringt. Des weiteren enthält der Kompressor 7 einen Bypaß 18, mit dem im Falle eines zu hohen Fahrzeugniveaus durch ein Ablaßventil 19 Luft aus den Luftfederelementen 2 (z.B. Federbeine) unter Umgehung der Pumpe 16 durch die Ansaugöffnung 17 in die Atmosphäre entspannt werden kann. Das ebenfalls elektromagnetisch schaltbare Ablaßventil 19 ist über eine entsprechende elektrische Schaltleitung 20 an die Ausgangsseite 12 des Steuergerätes 11 angeschlossen. Die Pumpe 16 ist über eine elektrische Schaltleitung 21 ebenfalls an die Ausgangsseite 12 des Steuergerätes 11 angeschlossen.

Den Rädern 3 bzw. einer nicht dargestellten, zwei Räder 3 tragenden Achse ist jeweils ein Niveausensor 22 zugeordnet, wobei jeder Niveausensor 22 über eine entsprechende Signalleitung 23 an die Eingangsseite 15 des Steuergerätes 11 angeschlossen ist. Die Niveausensoren 22 detektieren beispielsweise den Abstand zwischen den Fahrzeugachsen bzw. Radachsen und einem Fahrzeugaufbau, was durch die Pfeile a symbolisch dargestellt ist. Über die Signalleitungen 23 wird dann ein mit dem gemessenen Abstand korrelierender Signalwert dem Steuergerät 11 zur Verfügung gestellt. Diese Signalwerte bilden einen wichtigen Parameter, der bei der Niveauregulierung und/oder Federung des Fahrzeuges von dem Steuergerät 11 berücksichtigt wird. Weitere, in dieser Hinsicht wichtige Parameter, wie z.B. der aktuelle Lenkwinkel und die aktuelle Fahrzeuggeschwindigkeit werden über Signalleitungen 24 der Eingangsseite 15 des Steuergerätes 11 zugeleitet, die mit entsprechenden Sensoren od.dgl. verbunden sind.

Darüber hinaus verfügt die erfindungsgemäße Luftfederungsanlage 1 über einen Umgebungsdrucksensor 25, der an einer geeigneten, durch einen Punkt symbolisierten Stelle 26 den atmosphärischen Druck $P_U$ in der Umgebung des Fahrzeuges mißt. Der Umgebungsdrucksensor 25 generiert einen mit dem aktuellen, gemessenen Umgebungsdruck $P_U$ korrelierenden Signalwert $S_U$, der über eine entsprechende Signalleitung 27 an die Eingangsseite 15 des Steuergerätes 11 weitergeleitet wird.

Die erfindungsgemäße Luftfederungsanlage, 1 arbeitet wie folgt:

Im Zentraldruckspeicher 9 herrscht ein Luftdruck $P_Z$, der zwischen einem unteren Druckgrenzwert $P_{Zu}$ und einem oberen Druckgrenzwert $P_{Zo}$ liegt. Wenn das Steuergerät 11 feststellt, daß eine Niveauanhebung erforderlich ist, werden das Sperrventil 8 sowie die entsprechenden Sperrventile 5 über die zugehörigen Schaltleitungen 10 in die entsprechenden Durchgangsstellungen geschaltet. Dabei ist der untere Grenzdruck $P_{Zu}$ größer als der maximal für die Luftfederelemente 2 benötigte Luftdruck, um eine Niveauanhebung des voll beladenen Fahrzeuges zu bewirken. Durch die Schaltung der Ventile 5 und 8 werden die entsprechenden Luftfederelemente 2 mit dem im Zentraldruckspeicher 9 herrschenden Luftdruck $P_Z$ beaufschlagt, wobei dieser während der Niveauanhebung absinkt. Da der im Zentraldruckspeicher 9 herrschende Druck $P_Z$ aufgrund des geöffneten Ventils 8 ebenfalls in der Druckleitung 6 ansteht, kann dieser Druck $P_Z$ vom Speicherdrucksensor 13 detektiert werden, wobei entsprechende Signalwerte $S_Z$ generiert und an das Steuergerät 11 weitergeleitet werden. Hierbei erfolgt eine Druckmessung zweckmäßigerweise stets vor und nach einem Niveauanhebevorgang. Vorher: Um zu prüfen, ob der Speicherdruck $P_Z$ für einen Niveauanhebevorgang ausreicht. Nachher: Um zu prüfen, ob der Zentraldruckspeicher 9 entsprechend den Füllgrenzen wieder geladen werden muß. Während eines Niveauanhebevorganges kann mit dieser Drucksensoranordnung keine eindeutige Aussage über den Zentralspeicherdruck $P_Z$ gemacht werden, da die Druckleitung 6 dann mit mindestens einem der Luftfederelemente 2 verbunden ist.

Erreicht der Druck $P_Z$ im Zentraldruckspeicher 9 den unteren Grenzdruck $P_{Zu}$, reagiert das Steuergerät 11 und veranlaßt über die Schaltleitung 21 eine Aufladung des Zentraldruckspeichers 9 durch die Pumpe 16. Gleichzeitig unterstützt die Pumpe 16 dabei die Niveauanhebung, sofern die entsprechenden Sperrventile 5 noch geöffnet sind. Die Pumpe 16 bleibt solange aktiviert, bis der Druck $P_Z$ im Zentraldruckspeicher 9 den oberen Grenzdruck $P_{Zo}$ erreicht, dann veranlaßt das Steuergerät 11 das Abschalten der Pumpe 16 und gegebenenfalls das Schließen des Sperrventils 8.

Die Leistungsfähigkeit der Luftfederungsanlage 1 hängt maßgeblich von dem im Zentraldruckspeicher 9 herrschenden Druckniveau ab, wobei sich dieses Druckniveau $P_Z$, wie erläutert, sich zwischen einem unteren Grenzdruck $P_{Zu}$ und einem oberen Grenzdruck $P_{Zo}$ bewegt. Je höher das zur Verfügung stehende Druckniveau $P_Z$ ist, desto besser, insbesondere schneller kann beispielsweise eine Niveauanhebung durchgeführt werden.

Das im Zentraldruckspeicher 9 erreichbare Druckniveau hängt dabei von der Leistungsfähigkeit des verwendeten Kompressors 7 bzw. der verwendeten Pumpe 16 ab. Die Leistungsfähigkeit der Pumpe 16 hängt zum einen vom jeweils herrschenden Umgebungsdruck $P_U$ ab, wobei mit abnehmendem Umgebungsdruck $P_U$ der von der Pumpe 16 maximal erzielbare Enddruck ebenfalls abnimmt. Beispielsweise ermöglicht ein bestimmter Pumpentyp bei einem Umgebungsdruck von 1 bar eine Aufladung des Zentraldruckspeichers 9 auf 18 bar. Bei einem Umgebungsdruck von 0,625 bar läßt sich mit derselben Pumpe 16 dagegen nur noch ein Enddruck von 13 bar im Zentraldruckspeicher 9 erzielen. Um die Pumpe 16 bzw. den Kompressor 7 nicht unnötig zu belasten, muß der vorgenannte obere Grenzdruck $P_{Zo}$ des Zentraldruckspeichers 9, bei dem die Pumpe 16 vom Steuergerät 11 abgeschaltet wird, jedenfalls unterhalb des von der Pumpe 16 maximal erzielbaren Enddruckes liegen.

Herkömmliche Luftfederungsanlagen berücksichtigen den Einfluß des Umgebungsdruckes $P_U$ dahingehend, daß der obere Grenzdruck $P_{Zo}$ für den Fall des kleinsten zu erwartenden Umgebungsdruckes (im Beispiel 0,625 bar) auf einen Wert unterhalb des bei diesem Umgebungsdruck (0,625 bar) von der verwendeten Pumpe 16 maximal erzielbaren Enddruckes (im Beispiel 13 bar) eingestellt wird, z.B. auf $P_{Zu}$ = 12 bar. Im Unterschied dazu wird bei der erfindungsgemäßen Luftfederungsanlage 1 der Umgebungsdruck $P_U$ dahingehend berücksichtigt, daß der obere Grenzdruck $P_{Zo}$ und im Ausführungsbeispiel auch der untere Grenzdruck $P_{Zu}$ in Abhängigkeit des Umgebungsdruckes $P_U$ variiert werden.

Zu diesem Zweck verarbeitet das Steuergerät 11 das vom Umgebungsdrucksensor 25 generierte Signal $S_U$ und ermittelt daraus die jeweils aktuellen Werte für den unteren Grenzdruck $P_{Zu}$ und den oberen Grenzdruck $P_{Zo}$ für den Zentraldruckspeicher 9. Dabei kann die Ermittlung der genannten Druckwerte beispielsweise anhand folgender Gleichungen durchgeführt werden:

$$P_{Zo} = P_{ZoReferenz} \cdot [1 - K \cdot (P_{UReferenz} - P_U)]$$

$$P_{Zu} = P_{ZuReferenz} \cdot [1 - K \cdot (P_{UReferenz} - P_U)]$$

mit:

| | |
|---|---|
| $P_{Zo}$ = | errechneter oberer Grenzdruck im Zentraldruckspeicher 9, |
| $P_{ZoReferenz}$ = | voreingestellter oberer Grenzdruck bei einem Referenzumgebungsdruck, |
| K = | Steigung der Gleichung, |
| $P_{UReferenz}$ = | Referenzumgebungsdruck, |
| $P_U$ = | gemessener Umgebungsdruck, |
| $P_{Zu}$ = | errechneter Grenzdruck im Zentraldruckspeicher 9, |
| $P_{ZuReferenz}$ = | voreingestellter unterer Grenzdruck bei einem Referenzumgebungsdruck, |
| K = | Steigung der Gleichung, |
| $P_{UReferenz}$ = | Referenzumgebungsdruck, |
| $P_U$ = | gemessener Umgebungsdruck. |

Wenn beispielsweise als Referenzumgebungsdruck $P_{UReferenz}$ der auf Meeresniveau herrschende Umgebungsdruck von etwa 1 bar angenommen wird und der untere Grenzdruck $P_{ZuReferenz}$ bei 1 bar Umgebungsdruck $P_{UReferenz}$ auf 13 bar und obere Grenzdruck $P_{ZoReferenz}$ bei 1 bar Umgebungsdruck $P_{UReferenz}$ auf 16 bar eingestellt werden und wenn als Steigung K für obige Gleichungen ein Wert von 2/3 angenommen wird, ergibt sich der in nachfolgender Tabelle dargestellte Zusammenhang zwischen exemplarisch gewählten Umgebungsdruckwerten $P_U$ und dem unteren Grenzdruck $P_{Zu}$ und dem oberen Grenzdruck $P_{Zo}$ :

| $P_U$ (bar) | $P_{Zu}$ (bar) | $P_{Zo}$ (bar) |
|---|---|---|
| 0,625 | 9,75 | 12,00 |
| 0,650 | 9,97 | 12,27 |
| 0,675 | 10,18 | 12,53 |
| 0,700 | 10,40 | 12,80 |
| 0,725 | 10,62 | 13,07 |
| 0,750 | 10,83 | 13,33 |
| 0,775 | 11,05 | 13,60 |
| 0,800 | 11,27 | 13,87 |
| 0,825 | 11,48 | 14,13 |
| 0,850 | 11,70 | 14,40 |
| 0,875 | 11,92 | 14,67 |
| 0,900 | 12,13 | 14,93 |
| 0,925 | 12,35 | 15,20 |
| 0,950 | 12,57 | 15,47 |
| 0,975 | 12,78 | 15,73 |
| 1,000 | 13,00 | 16,00 |

mit:

$P_{UReferenz}$ = 1 bar,
K = 2/3,
$P_{Zu}$ (1 bar) = 13 bar,
$P_{Zo}$ (1 bar) = 16 bar.

**Patentansprüche**

1. Luftfederungsanlage für Fahrzeuge, insbesondere Kraftfahrzeuge, mit Luftfederelementen, die den Fahrzeugachsen bzw. Fahrzeugrädern zugeordnet sind, mit einem Kompressor und einem davon gespeisten Zentraldruckspeicher zur Druckluftversorgung der Luftfederelemente, mit einem Speicherdrucksensor, der den Luftdruck ($P_Z$) im Zentraldruckspeicher detektiert und einen damit korrelierenden Signalwert ($S_Z$) generiert, und mit einer elektronischen Steuereinrichtung, die die Signalwerte ($S_Z$) des Speicherdrucksensors verarbeitet und eine Druckbeaufschlagung des Zentraldruckspeichers durch den Kompressor veranlaßt, wenn der Signalwert ($S_Z$) des Speicherdrucksensors einen vorbestimmten unteren Schwellsignalwert ($S_{Zu}$) erreicht, und diese Druckbeaufschlagung beendet, wenn der Signalwert ($S_Z$) des Speicherdrucksensors einen vorbestimmten oberen Schwellsignalwert ($S_{Zo}$) erreicht,
**dadurch gekennzeichnet,**
**daß** ein Umgebungsdrucksensor (25) vorgesehen ist, der den Luftdruck ($P_U$) in der das Fahrzeug umgebenden Atmosphäre detektieren und einen damit korrelierenden Signalwert ($S_U$) generieren kann, wobei die Steuereinrichtung (11) die Signalwerte ($S_U$) des Umgebungsdrucksensors (25) verarbeiten und in Abhängigkeit davon den oberen Schwellsignalwert ($S_{Zo}$) festlegten kann.

2. Luftfederungsanlage nach Anspruch 1,
**dadurch gekennzeichnet,**
**daß** die Abhängigkeit zwischen dem oberen Schwellsignalwert ($S_{Zo}$) und dem Signalwert ($S_U$) des Umgebungsdrucksensors (25) derart gewählt ist, daß der mit dem oberen Schwellsignalwert ($S_{Zo}$) korrelierende obere Grenzdruck ($P_{Zo}$) im Zentraldruckspeicher (9) mit zunehmendem Umgebungsdruck ($P_U$) steigt und mit abnehmendem Umgebungsdruck ($P_U$) fällt.

3. Luftfederungsanlage nach Anspruch 1 oder 2,
**dadurch gekennzeichnet,**
**daß** die Abhängigkeit zwischen dem oberen Schwellsignalwert ($S_{Zo}$) und dem Signalwert ($S_U$) des Umgebungsdrucksensors (25) derart gewählt ist, daß sich der mit dem oberen Schwellsignalwert ($S_{Zo}$) korrelierende obere Grenzdruck ($P_{Zo}$) im Zentraldruckspeicher (9) etwa proportional zum Umgebungsdruck ($P_U$) verändert.

**4.** Luftfederungsanlage nach einem der Ansprüche 1 bis 3,
**dadurch gekennzeichnet,**
**daß** der Schwellsignalwert ($S_{Zo}$) einem in Analogie zu der Gleichung:

$$P_{Zo} = P_{ZoReferenz} \cdot [1 - K \cdot (P_{UReferenz} - P_U)]$$

berechneten Wert entspricht, wobei

$P_{Zo}$ = errechneter oberer Grenzdruck im Zentraldruckspeicher (9),
$P_{ZoReferenz}$ = voreingestellter oberer Grenzdruck bei einem Referenzumgebungsdruck,
$K$ = Steigung der Gleichung,
$P_{UReferenz}$ = Referenzumgebungsdruck,
$P_U$ = gemessener Umgebungsdruck.

**5.** Luftfederungsanlage nach einem der Ansprüche 1 bis 4,
**dadurch gekennzeichnet,**
**daß** die Steuereinrichtung (11) in Abhängigkeit der Signalwerte ($S_U$) des Umgebungsdrucksensors (25) den unteren Schwellsignalwert ($S_{Zu}$) festlegt.

**6.** Luftfederungsanlage nach Anspruch 5,
**dadurch gekennzeichnet,**
**daß** die Abhängigkeit zwischen dem unteren Schwellsignalwert ($S_{Zu}$) und dem Signalwert ($S_U$) des Umgebungsdrucksensors (25) derart gewählt ist, daß der mit dem unteren Schwellsignalwert ($S_{Zu}$) korrelierende untere Grenzdruck ($P_{Zu}$) im Zentraldruckspeicher (9) mit zunehmendem Umgebungsdruck ($P_U$) steigt und mit abnehmendem Umgebungsdruck ($P_U$) fällt.

**7.** Luftfederungsanlage nach einem der Ansprüche 5 oder 6,
**dadurch gekennzeichnet,**
**daß** die Abhängigkeit zwischen dem unteren Schwellsignalwert ($S_{Zu}$) und dem Signalwert ($S_U$) des Umgebungsdrucksensors (25) derart gewählt ist, daß sich der mit dem unteren Schwellsignalwert ($S_{Zu}$) korrelierende untere Grenzdruck ($P_{Zu}$) etwa proportional zum Umgebungsdruck ($P_U$) verändert.

**8.** Luftfederungsanlage nach einem der Ansprüche 5 bis 7,
**dadurch gekennzeichnet,**
**daß** der untere Schwellsignalwert ($S_{Zu}$) einem in Analogie zu der Gleichung:

$$P_{Zu} = P_{ZuReferenz} \cdot [1 - K \cdot (P_{UReferenz} - P_U)]$$

berechneten Wert entspricht, wobei

$P_{Zu}$ = errechneter Grenzdruck im Zentraldruckspeicher,
$P_{ZuReferenz}$ = voreingestellter unterer Grenzdruck bei einem Referenzumgebungsdruck,
$K$ = Steigung der Gleichung,
$P_{UReferenz}$ = Referenzumgebungsdruck,
$P_U$ = gemessener Umgebungsdruck.

**9.** Luftfederungsanlage nach Anspruch 5 oder 6,
**dadurch gekennzeichnet,**
**daß** die Abhängigkeit zwischen dem unteren Schwellsignalwert ($S_{Zu}$) und dem Signalwert ($S_U$) des Umgebungsdrucksensors (25) derart gewählt ist, daß bei jedem Umgebungsdruck ($P_U$) das Verhältnis von oberem Grenzdruck ($P_{Zo}$) zu unterem Grenzdruck ($P_{Zu}$) etwa gleich groß ist.

**10.** Luft federungsanlage nach einem der vorhergehenden Ansprüche 4 bis 9,
**dadurch gekennzeichnet,**
**daß** die Steigung ($K$) der Gleichung den Wert K = 2/3 aufweist.

**11.** Luftfederungsanlage nach Anspruch 8 oder 10,
**dadurch gekennzeichnet,**
**daß** bei einem Referenzumgebungsdruck ($P_{UReferenz}$) von 1 bar der für den Zentraldruckspeicher (9) voreingestellte obere Grenzdruck ($P_{ZoReferenz}$) 16 bar beträgt und der am Zentraldruckspeicher (9) voreingestellte untere Grenzdruck ($P_{ZuReferenz}$) 13 bar beträgt.

**Claims**

**1.** An air suspension system for vehicles, in particular motor vehicles, with air suspension elements assigned to the axles or wheels of the vehicle, with a compressor and a central accumulator fed thereby to supply compressed air to the air suspension elements, with an accumulator pressure sensor which detects the air pressure ($P_Z$) in the central accumulator and generates a correlating signal value ($S_Z$), and with an electronic control device which processes the signal values ($S_Z$) from the accumulator pressure sensors and causes pressure to be applied to the central accumulator by the compressor if the signal value ($S_Z$) from the accumulator pressure sensor reaches a predetermined lower threshold signal value ($S_{Zu}$), and ends this pressure if the signal value ($S_Z$) from the accumulator pressure sensor reaches a predetermined upper threshold signal value ($S_{Zo}$),
**characterised in that**
an ambient pressure sensor (25) is provided which is able to detect the air pressure ($P_U$) in the atmosphere surrounding the vehicle and generate a correlating signal value ($S_Z$), the control device (11) being able to process the signal values ($S_U$) from the ambient pressure sensor (25) and set the upper threshold value ($S_{Zo}$) dependent thereupon.

2. An air suspension system in accordance with claim 1,
**characterised in that**
the dependence between the upper threshold signal value ($S_{Zo}$) and the signal value ($S_U$) from the ambient pressure sensor (25) is selected in such a manner that the upper limit pressure ($P_{Zo}$) in the central accumulator (9) correlating to the upper threshold vale signal ($S_{Zo}$) increases as the ambient pressure ($P_U$) rises and decreases as the ambient pressure ($P_U$) falls.

3. An air suspension system in accordance with claim 1 or 2,
**characterised in that**
the dependence between the upper threshold signal value ($S_{Zo}$) and the signal value ($S_U$) from the ambient pressure sensor (25) is selected in such a manner that the upper limit pressure ($P_{Zo}$) in the central accumulator (9) correlating to the upper threshold vale signal ($S_{Zo}$) varies roughly in proportion to the ambient pressure ($P_U$).

4. An air suspension system in accordance with one of claims 1 to 3,
**characterised in that**
the threshold signal value ($S_{Zo}$) corresponds to a value calculated analogously to the equation:

$$P_{Zo} = P_{ZoReference} \cdot [1 - K \cdot (P_{UReference} - P_U)]$$

where:

| | |
|---|---|
| $P_{Zo}$ = | calculated upper limit pressure in the central accumulator (9), |
| $P_{ZoReference}$ = | pre-set upper limit pressure at a reference ambient pressure, |
| K = | gradient of the equation, |
| $P_{UReference}$ = | reference ambient pressure, |
| $P_U$ = | measured ambient pressure. |

5. An air suspension system in accordance with one of claims 1 to 4,
**characterised in that**
the control device (11) sets the lower threshold signal value ($S_{Zu}$) dependant upon the signal value ($S_U$) from the ambient pressure sensor (25).

6. An air suspension system in accordance with claim 5,
**characterised in that**
the dependence between the lower threshold signal value ($S_{Zu}$) and the signal value ($S_U$) from the ambient pressure sensor (25) is selected in such a manner that the lower limit pressure ($P_{Zu}$) in the central accumulator (9) correlating to the lower threshold value signal ($S_{Zu}$) increases as the ambient pressure ($P_U$) rises and decreases as the ambient pressure ($P_U$) falls.

7. An air suspension system in accordance with one of claims 5 or 6,
**characterised in that**
the dependence between the lower threshold signal value ($S_{Zu}$) and the signal value ($S_U$) from the ambient pressure sensor (25) is selected in such a manner that the lower limit pressure ($P_{Zu}$) in the central accumulator (9) correlating to the lower threshold vale signal ($S_{Zu}$) varies roughly in proportion to the ambient pressure ($P_U$).

8. An air suspension system in accordance with one of claims 5 to 7,
**characterised in that**
the lower threshold signal value ($S_{Zu}$) corresponds to a value calculated analogously to the equation:

$$P_{Zu} = P_{ZuReference} \cdot [1 - K \cdot (P_{UReference} - P_U)]$$

where:

| | |
|---|---|
| $P_{Zu}$ = | calculated lower limit pressure in the central accumulator (9), |
| $P_{ZuReference}$ = | pre-set lower limit pressure at a reference ambient pressure, |
| K = | gradient of the equation, |
| $P_{UReference}$ = | reference ambient pressure, |
| $P_U$ = | measured ambient pressure. |

9. An air suspension system in accordance with claim 5 or 6,
**characterised in that**
the dependence between the lower threshold signal value ($S_{Zu}$) and the signal value ($S_U$) from the ambient pressure sensor (25) is selected in such a manner that the ratio between the upper limit pressure ($P_{Zo}$) and the lower limit pressure ($P_{Zu}$) is roughly the same at all ambient pressures ($P_U$).

10. An air suspension system in accordance with one of the preceding claims 4 to 9,
**characterised in that**
the gradient (K) of the equation has the value K = 2/3.

11. An air suspension system in accordance with claim 8 or 10,
**characterised in that**
at a reference ambient pressure ($P_{UReference}$) of 1 bar the upper limit pressure ($P_{ZoReference}$) pre-set for the central accumulator (9) is 16 bar and the lower limit pressure ($P_{ZuReference}$) pre-set at the central accumulator (9) is 13 bar.

## Revendications

**1.** Installation de suspension pneumatique pour véhicules, notamment pour véhicules automobiles, comportant des éléments de ressorts pneumatiques, qui sont associés aux essieux du véhicule ou aux roues du véhicule, comprenant un compresseur et un accumulateur central de pression alimenté par ce compresseur, pour alimenter en air comprimé les éléments de ressorts comprimés, un capteur de pression de l'accumulateur, qui détecte la pression de l'air ($P_Z$) dans l'accumulateur central de pression et génère une valeur de signal ($S_Z$) corrélée à cette pression, et un dispositif de commande électronique, qui traite les valeurs de signaux ($S_Z$) du capteur de pression de l'accumulateur et déclenche une charge en pression de l'accumulateur central de pression au moyen du compresseur lorsque la valeur de signal ($S_Z$) du capteur de pression de l'accumulateur atteint une valeur de signal inférieure de seuil prédéterminée ($S_{Zu}$) et arrête cette charge en pression lorsque la valeur du signal ($S_Z$) du capteur de pression de l'accumulateur atteint une valeur de signal de seuil supérieure prédéterminée ($S_{Zo}$), **caractérisée en ce qu'**il est prévu un capteur (25) de la pression ambiante, qui détecte la pression de l'air ($P_U$) dans l'atmosphère entourant le véhicule, et génère une valeur de signal ($S_U$) qui est corrélée à cette pression, le dispositif de commande (11) pouvant traiter les valeurs de signaux ($S_U$) du capteur (25) de la pression ambiante et pouvant déterminer, en fonction de ces valeurs, la valeur de signal de seuil supérieure ($S_{Zo}$).

**2.** Installation de suspension pneumatique selon la revendication 1, **caractérisée en ce que** la dépendance entre la valeur de signal de seuil supérieure ($S_{Zo}$) et la valeur de signal ($S_U$) du capteur (25) de la pression ambiante est choisie de telle sorte que la pression limite supérieure ($P_{Zo}$), qui est corrélée à la valeur de signal de seuil supérieure ($S_{Zo}$), dans l'accumulateur central de pression (9) augmente lorsque la pression ambiante ($P_U$) augmente et diminue lorsque la pression ambiante ($P_U$) diminue.

**3.** Installation de suspension pneumatique selon la revendication 1 ou 2, **caractérisée en ce que** la dépendance entre la valeur de signal de seuil supérieure ($S_{Zo}$) et la valeur de signal ($S_U$) du capteur (25) de la pression ambiante est choisie de telle sorte que la pression limite supérieure ($P_{Zo}$), qui est corrélée à la valeur du signal de seuil supérieur

($S_{Zo}$), dans l'accumulateur central de pression (9) varie d'une manière approximativement proportionnelle à la pression ambiante ($P_U$) diminue.

**4.** Installation de suspension pneumatique selon l'une des revendications 1 à 3, **caractérisée en ce que** la valeur de signal de seuil ($S_{Zo}$) correspond à une valeur calculée par analogie à la relation :

$$P_{Zo} = P_{Zor\acute{e}f\acute{e}rence} \cdot [1 - K \cdot (P_{Ur\acute{e}f\acute{e}rence} - P_U)]$$

avec

$P_{Zo}$ =      pression limite supérieure calculée dans l'accumulateur central de pression (9),

$P_{Zor\acute{e}f\acute{e}rence}$ =      pression limite supérieure préréglée pour une pression ambiante de référence,

$K$ =      pente de la droite

$P_{Ur\acute{e}f\acute{e}rence}$ =      pression ambiante de référence

$P_U$ =      pression ambiante mesurée.

**5.** Installation de suspension pneumatique selon l'une des revendications 1 à 4, **caractérisée en ce que** le dispositif de commande (11) détermine la valeur de signal de seuil inférieure ($S_{Zu}$) en fonction des valeurs de signal ($S_U$) du capteur (25) de la pression ambiante.

**6.** Installation de suspension pneumatique selon la revendication 5, **caractérisée en ce que** la dépendance entre la valeur de signal de seuil inférieure ($S_{Zo}$) et la valeur de signal ($S_U$) du capteur (25) de la pression ambiante est choisie de telle sorte que la pression limite inférieure ($P_{Zo}$), qui est corrélée à la valeur de signal de seuil inférieure ($S_{Zo}$), dans l'accumulateur central de pression (9) augmente lorsque la pression ambiante ($P_U$) augmente et diminue lorsque la pression ambiante ($P_U$) diminue.

**7.** Installation de suspension pneumatique selon l'une des revendications 5 ou 6, **caractérisée en ce que** la dépendance entre la valeur de signal de seuil inférieure ($S_{Zo}$) et la valeur de signal ($S_U$) du capteur (25) de la pression ambiante est choisie de telle sorte que la pression limite inférieure ($P_{Zu}$), qui est corrélée à la valeur de signal de seuil inférieur ($S_{Zo}$), dans l'accumulateur central de pression (9) augmente lorsque la pression ambiante ($P_U$) varie d'une manière approximativement proportionnelle à la pression ambiante ($P_U$) diminue.

**8.** Installation de suspension pneumatique selon l'une des revendications 5 à 7, **caractérisée en ce que** la valeur de signal de seuil inférieure ($S_U$) correspond à une valeur calculée par analogie à la relation

$$P_{Zu} = P_{Zuréférence} \cdot [1 - K \cdot (P_{Uréférence} - P_U)]$$

avec

| | |
|---|---|
| $P_{Zu} =$ | pression limite inférieure calculée dans l'accumulateur central de pression (9), |
| $P_{Zuréférence} =$ | pression limite inférieure préréglée pour une pression ambiante de référence, |
| $K =$ | pente de la droite |
| $P_{Uréférence} =$ | pression ambiante de référence |
| $P_U =$ | pression ambiante mesurée. |

9. Installation de suspension pneumatique selon la revendication 5 ou 6, **caractérisée en ce que** la dépendance entre la valeur de signal de seuil inférieure ($S_{Zu}$) et la valeur de signal ($S_U$) du capteur (25) de la pression ambiante est choisie de telle sorte que, pour chaque pression ambiante ($P_U$), le rapport de la pression limite supérieure ($P_{Zo}$) à la pression limite inférieure ($P_{Zu}$) est approximativement le même.

10. Installation de suspension pneumatique selon l'une des revendications précédentes 4 à 9, **caractérisée en ce que** la pente (K) de la droite possède la valeur K = 2/3.

11. Installation de suspension pneumatique selon la revendication 8 ou 10, **caractérisée en ce que** pour une pression ambiante de référence ($P_{Uréférence}$) de 1 bar, la pression limite supérieure ($P_{Zoréférence}$) préréglée pour l'accumulateur central de pression (9) est égale à 16 bars et la pression limite inférieure ($P_{Zuréférence}$) préréglée dans l'accumulateur central de pression (9) est égale à 13 bars.

Fig. 1

EP 0 945 288 B1